# EUROPÄISCHE PATENTSCHRIFT

(11) **EP 1 989 469 B1**
(45) Veröffentlichungstag und Bekanntmachung des Hinweises auf die Patenterteilung: **19.08.2009**
(21) Anmeldenummer: 07726386.1
(22) Anmeldetag: 14.02.2007
(51) Int. Cl.: F16H 57/08

(54) **PLANETENRADSATZ**
PLANETARY GEAR SET
JEU DE ROUES PLANÉTAIRES

(30) Priorität: 02.03.2006 DE 102006009622
(43) Veröffentlichungstag der Anmeldung: 12.11.2008
(73) Patentinhaber: ZF Friedrichshafen AG, 88038 Friedrichshafen (DE)
(72) Erfinder: DIOSI, Gabor, 88045 Friedrichshafen (DE); HAUPT, Josef, 88069 Tettnang (DE); BREHMER, Martin, 78467 Konstanz (DE)
(86) Internationale Anmeldenummer: PCT/EP2007/051430
(87) Internationale Veröffentlichungsnummer: WO 2007/099036

(56) Entgegenhaltungen:
- EP-A1- 0 851 149
- EP-A2- 0 274 874
- WO-A-20/07003306
- JP-A- 9 068 262
- JP-A- 2002 021 946
- JP-A- 2005 147 285
- US-B2- 6 758 786

## Beschreibung

Die Erfindung betrifft einen Planetenradsatz nach dem Oberbegriff des Patentanspruches 1 und des Patentanspruches 2.

Ein aus EP 0 274 874 B1 bekannter Planetenradsatz besteht aus einem Planetenträger, welcher mehrere über den Umfang verteilt angeordnete Planetenräder aufnimmt, die über Planetenradbolzen im Planetenradträger gelagert sind. Dazu weist der Planetenträger zwei zueinander parallele Wände, ein erstes und ein zweites Stegblech, auf, in welchen fluchtende Bohrungen zur Aufnahme der Planetenradbolzen angeordnet sind. Die Planetenradbolzen sind axial im Planetenradträger fixiert, wobei einerseits eine Stufenbohrung mit einem axialen Anschlag und andererseits ein Sicherungsring in einem Stegblech vorgesehen sind. Die Planetenräder weisen Verzahnungen auf und stehen mit nicht dargestellten weiteren Zahnrädern, einem Sonnenrad und einem Hohlrad, in Verbindung. Die Planetenräder sind über Wälz- oder Gleitlager auf den Planetenradbolzen gelagert, wobei die Lagerstellen geschmiert werden müssen. Hierzu ist in den Planetenradbolzen eine von außen zugängliche Axialbohrung vorgesehen, deren Eingang ein Ölfangblech zugeordnet ist.

Durch die gattungsgemäße EP 0 851 149 A1 wurde ein Planetenradsatz mit einem axial benachbarten Schaltelement, einer Lamellenkupplung, bekannt. Der Planetenradsatz besteht hier ebenfalls aus einem Planetenradträger, welcher Planetenräder aufnimmt, die mit einer Innensonne und einem äußeren Hohlrad in Zahneingriff stehen. Die Planetenräder sind über Planetenradbolzen in Stegblechen des Planetenträgers gelagert, wobei ein Stegblech mit einem Außenlamellenträger des benachbarten Schaltelementes verbunden ist. Der Außenlamellenträger ist gleichzeitig als Kupplungszylinder ausgebildet, in welchem ein Kupplungskolben gleitend angeordnet ist und mit dem Kupplungszylinder einen Druckraum bildet, welcher sich auf der dem Planetenradsatz abgewandten Seite des Lamellenpaketes befindet.

Es ist Aufgabe der vorliegenden Erfindung, einen Planetenradsatz der eingangs genannten Art in raumsparender, vereinfachter und kostengünstiger Weise an ein benachbartes Schaltelement anzubinden.

Diese Aufgabe wird zunächst durch die Merkmale der Patentansprüche 1 und 2 gelöst. Erfindungsgemäß ist dabei vorgesehen, dass ein Stegblech des Planetenradträgers mit einem ein Drehmoment übertragenden Teil eines benachbarten Schaltelementes drehfest verbunden ist, wobei es sich vorzugsweise um einen Lamellenträger einer Lamellenkupplung handelt. Das Stegblech des Planetenradträgers und der Lamellenträger, insbesondere ein Außenlamellenträger können vorzugsweise einstückig ausgebildet, d. h. zu einem Teil integriert werden. Dadurch ergibt sich der Vorteil einer kompakten Bauweise bei der Koppelung des benachbarten Schaltelementes mit dem Planetenradsatz.

Zur axialen Fixierung der Planetenradbolzen sind in den Stegblechen Sicherungsmittel in Form von Sicherungsringen und Stufenbohrungen vorgesehen. Alternativ können die Planetenradbolzen durch Verstemmung mit den Stegblechen axial gesichert werden.

Erfindungsgemäß ist mit dem Stegblech, welches den Lamellenträger trägt, ein Ringzylinder drehfest verbunden, vorzugsweise durch eine Nietverbindung. Der Ringzylinder nimmt in sich einen axial gleitenden Ringkolben auf, der mit dem Ringzylinder einen Druckraum bildet, welcher über ein Kanalsystem mit Drucköl versorgt wird, um das Schaltelement zu betätigen, d. h. eine Axialkraft auf das Lamellenpaket aufzubringen. Hierzu ist in weiterer vorteilhafter Ausbildung der Erfindung am Kolben ein äußerer Druckring angeordnet; der einen dem Lamellenpaket entsprechenden Durchmesser aufweist. Erfindungsgemäß, wie beansprucht im Anspruch 1, dient der Ringzylinder mit seinem Boden gleichzeitig als axialer Anschlag für die Planetenradbolzen, sodass nur noch ein weiterer axialer Anschlag für die entgegengesetzte Richtung erforderlich ist. Dies kann vorteilhafterweise durch einen Sicherungsring im ersten oder im zweiten Stegblech des Planetenradträgers erfolgen.

In weiterer vorteilhafter Ausgestaltung der Erfindung weist der Boden des Ringzylinders eine axial gerichtete Einbuchtung auf und bildet somit eine Schmierölkammer, welche auf ihrer radial innen liegenden Eingangsseite mit einem Schmierölversorgungssystem und auf ihrer radial außen liegenden Ausgangseite mit Axialbohrungen der Planetenradbolzen kommuniziert, von wo aus das Schmieröl über Radialbohrungen zu den Schmierstellen der Planetenräder geleitet wird.

In weiterer vorteilhafter Ausgestaltung der Erfindung weist der Ringzylinder eine radial innen liegende, verlängerte Zylinderwand auf, welche mit der Rückseite des Kolbens eine Druckausgleichskammer bildet. Letztere wird über eine Bohrung in der verlängerten Zylinderwand mit Schmieröl, d. h. drucklos versorgt, sodass sich für den Kolben ein Ausgleich des dynamischen Druckes, d.h. ein drehzahlunabhängiger Druckaufbau in der Kupplung ergibt.

Der Ringzylinder kann somit folgende Funktionen erfüllen: 1. axialer Anschlag für die Planetenradbolzen; 2. Druckzylinder in Verbindung mit dem Kolben zur Betätigung des Schaltelements; 3. Ölfangblech mit Bildung einer Schmierölkammer zur Schmierölversorgung der Schmierstellen der Planetenräder; 4. Teil des Druckausgleichsraumes. Damit ergibt sich der Vorteil einer axial verkürzten Bauweise und einer engen Anbindung von Planetenradsatz und Schaltelement.

Ausführungsbeispiele der Erfindung sind in der Zeichnung dargestellt und werden im Folgenden näher beschrieben.

Es zeigen:
- Fig. 1: einen Planetenradsatz mit benachbartem Schaltelement (erstes Ausführungsbeispiel der Erfindung);
- Fig. 2: einen Ausschnitt eines Planetenradsatzes mit benachbartem Schaltelement (zweites Ausführungsbeispiel der Erfindung);
- Fig. 3: einen Planetenradsatz mit benachbartem Schaltelement (drittes Ausführungsbeispiel der Erfindung) und
- Fig. 4: einen Ausschnitt eines Planetenradsatzes mit benachbartem Schaltelement (viertes Ausführungsbeispiel der Erfindung).

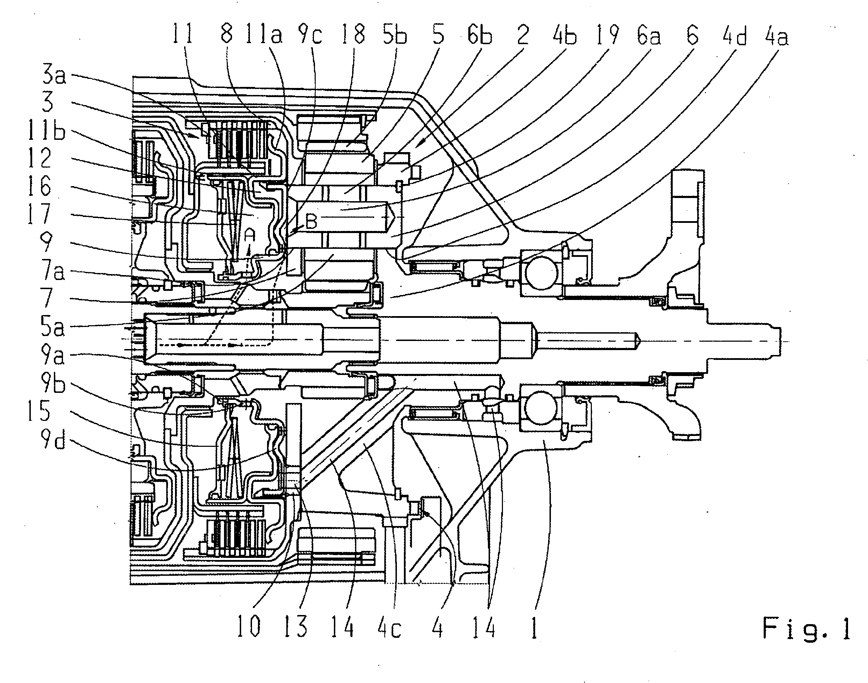

**Fig. 1** zeigt einen Ausschnitt eines Getriebegehäuses 1, in welchem ein Planetenradsatz 2 mit einem axial benachbarten Schaltelement 3 angeordnet ist - beide Komponenten 2, 3 sind Teile eines nicht vollständig dargestellten Automatgetriebes für ein Kraftfahrzeug. Der Planetenradsatz 2 besteht aus einem Planetenträger 4 und Planetenrädern 5, welche über Planetenradbolzen 6 im Planetenträger 4 gelagert sind. Die Planetenbolzen 6 weisen eine axiale Sacklochbohrung 6a und Radialbohrungen 6b auf, welche der Schmierölversorgung der Planeten 5 dienen, welche über ein Gleit- oder Wälzlager 5a auf den Bolzen 6 gelagert sind. Der Planetenradträger 4, kurz Planetenträger genannt, weist eine Nabe 4a auf, mit welcher ein erstes Stegblech 4b sowie ein Befestigungsarm 4c verbunden sind (auf dem Umfang verteilt sind mehrere, insbesondere je drei Stegbleche bzw. Stegarme und Befestigungsarme vorgesehen). Im ersten Stegblech 4b ist eine Bohrung 4d zur Aufnahme des Bolzens 6 angeordnet. Der Planetenträger 4 weist ferner ein zweites Stegblech 7 auf, welches parallel zu dem ersten Stegblech 4b angeordnet und mit dem Befestigungsarm 4c drehfest verbunden ist. Das zweite Stegblech 7 weist Bohrungen 7a zur Aufnahme des Planetenbolzens 6 auf. Vorzugsweise sind auf dem Umfang des Planetenradsatzes 2 drei Planeten 5 über drei Bolzen 6 im Planetenträger 4 gelagert, wobei die Planeten 5 mit in der Zeichnung dargestellten, jedoch nicht mit Bezugszahlen versehenen Zahnrädern, einer Innensonne und einer Außensonne (Hohlrad), kämmen. Das zweite Stegblech 7 ist mit einem Außenlamellenträger 8 des Schaltelementes 3 verbunden, z. B. durch eine nicht dargestellte Verschweißung oder auch durch einstückige Ausbildung. Mit dem Außenlamellenträger 8 stehen Außenlamellen eines Lamellenpaketes 3a in Eingriff, welches abwechselnd angeordnete Innenlamellen aufweist, die mit einem Innenlamellenträger in Eingriff stehen (ohne Bezugszahlen). An dem zweiten Stegblech 7 ist ein Ringzylinder 9 mit seinem Boden 9c befestigt, und zwar vorzugsweise durch eine Nietverbindung 10. Ein Ringkolben 11 wird axial gleitend von dem Ringzylinder 9 aufgenommen und bildet mit diesem einen Druckraum 12. Im Boden 9a des Ringzylinders 9 und in dem zweiten Stegblech 7 ist eine Durchgangsbohrung 13 angeordnet, welche über Druckölkanäle 14 mit einer nicht näher dargestellten stationären Druckölquelle verbunden ist. Der als Blechteil ausgeformte Ringkolben 11 weist einen radial sich nach außen erstreckenden Druckring 11a auf, welcher im Bereich des Lamellenpaketes 3a angeordnet ist. Der Ringzylinder 9 weist eine radial innen liegende, verlängerte Zylinderwand 9a auf, in welcher eine Durchtrittsbohrung 9b angeordnet ist. Am Ringkolben 11 ist ein zylindrischer Fortsatz 11 b befestigt, innerhalb dessen eine Stauscheibe 15 angeordnet ist, welche mit der Zylinderwand 9a, der Rückseite des Kolbens 11 und dem zylindrischen Fortsatz 11 b eine Druckausgleichskammer 16 bildet, in welcher eine Tellerfeder 17 als Rückstellfeder für den Kolben 11 angeordnet ist. Die Stauscheibe 15 ist mit ihrem einen Ende in der Zylinderwand 9a formschlüssig aufgenommen und bildet somit das Widerlager für die Tellerfeder 17, während das andere Ende der Stauscheibe 15 innerhalb des zylindrischen Fortsatzes 11b gleitend angeordnet und abgedichtet ist. Die Ausgleichskammer 16 wird entsprechend dem gestrichelt dargestellten Pfeil A mit Schmieröl, d. h. drucklos versorgt. Der Zylinderboden 9c weist eine ringförmige Einbuchtung 9d auf, welche mit dem zweiten Stegblech 7 eine umlaufende Schmierölkammer 18 bildet. Die Schmierölkammer 18 weist einen radial innen liegenden Zugang in Form eines Spaltes zwischen dem Zylinderboden 9a und dem Stegblech 7 auf, sodass sie entsprechend dem gestrichelten Pfeil B mit Schmieröl versorgt werden kann, welches auf diesem Wege über die Schmierölkammer 18 in die Bohrung 6a des Planetenbolzens 6 und über die Radialbohrungen 6b zum Lager 5a des Planeten 5 gelangt.

Der Planetenbolzen 6 schlägt mit einer Stirnfläche an den Boden 9c des Ringzylinders 9 an und wird somit in einer Richtung durch den Ringzylinder 9 axial fixiert. Die dem Ringzylinder 9 abgewandt Stirnfläche des Planetenbolzens 6 wird durch einen Sicherungsring 19, der in einer Nut des Planetenträgers 4 angeordnet ist, gesichert. Damit ist der Planetenbolzen 6 in beiden Richtungen axial gesichert. Die Funktion des Schaltelementes 3 entspricht grundsätzlich dem Stand der Technik: zum Schließen des Schaltelementes 3 wird der Druckraum 12 über die Kanäle 14 und die Durchtrittsbohrung 13 mit Drucköl versorgt, sodass der Ringkolben 11 in der Zeichnung nach links bewegt wird und mit seinem äußeren Druckring 11a gegen das Lamellenpaket 3a drückt, sodass der Außenlamellenträger 8 mit dem Innenlamellenträger kraftschlüssig verbunden wird. Da der Ringzylinder 9 und damit der Druckraum 12 rotiert, ergibt sich zusätzlich ein drehzahlbedingter dynamischer Druckanteil, welcher durch den Öldruck im Ausgleichsraum 16 ausgeglichen wird.

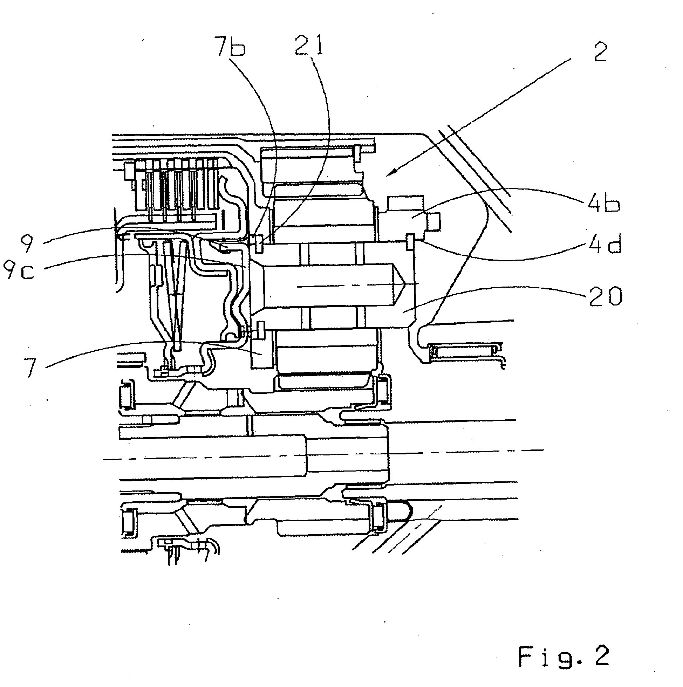

**Fig. 2** zeigt ein weiteres Ausführungsbeispiel der Erfindung, wobei für gleiche Teile gleiche Bezugszahlen wie in Fig. 1 verwendet werden. Dargestellt ist ein oberer Ausschnitt des Planetenradsatzes 2 mit einem leicht veränderten Bolzen 20, dessen axiale Fixierung gegenüber dem Ausführungsbeispiel in Fig. 1 abgewandelt ist. Der Planetenbolzen 20 liegt mit seiner in der Zeichnung links angeordneten Stirnfläche am Boden 9c des Ringzylinders 9 an und ist andererseits durch einen Sicherungsring 21 gegenüber dem Stegblech 7 gesichert, d. h. gegen eine Axialverschiebung nach rechts (in der Zeichnung). Hierfür ist in dem Stegblech 7 eine Stufenbohrung 7b vorgesehen. Der Sicherungsring 20 ist in einer Ringnut im Planetenbolzen 20 gehalten. Im Unterschied zu Fig. 1 entfällt in der Bohrung 4d des Steges 4b die Ringnut mit Sicherungsring.

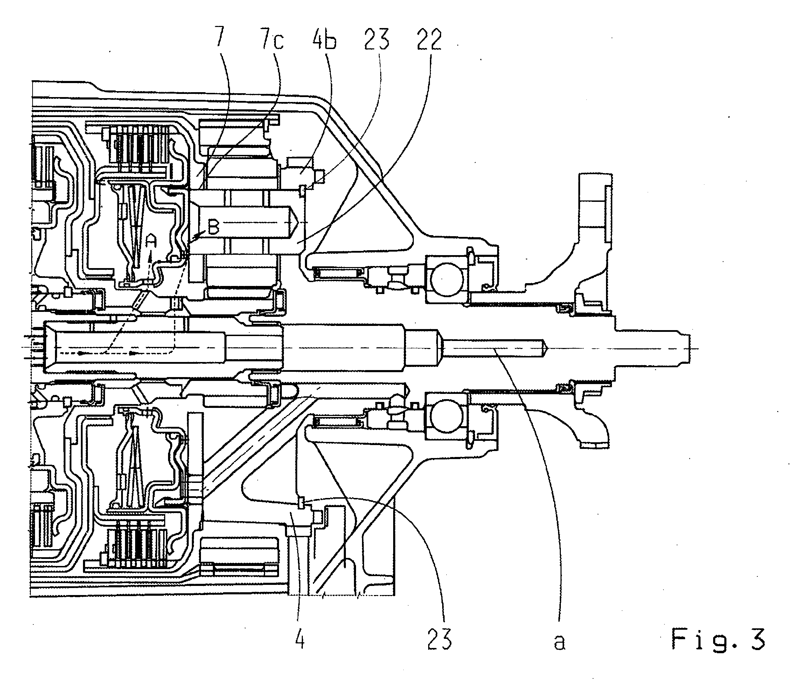

**Fig. 3** zeigt ein weiteres Ausführungsbeispiel der Erfindung, wobei wiederum für gleiche Teile gleiche Bezugszahlen verwendet werden. Dargestellt ist eine weitere Variante zur axialen Fixierung des Planetenbolzens 22, der wiederum in Bohrungen der beiden Stegbleche 4b, 7 gelagert ist. Das zweite Stegblech 7 weist eine Stufenbohrung 7c auf, wobei der größere Durchmesser (Außendurchmesser des Planetenbolzens) auf der Seite des Planetenrades 5 angeordnet ist. Somit ergibt sich für die in der Zeichnung links angeordnete Stirnfläche des Planetenbolzens 22 ein axialer Anschlag im zweiten Stegblech 7. Auf der anderen Seite, d. h. im Steg 4b und Planetenträger 4 ist ein Sicherungsring 23 eingesetzt, der koaxial zur Rotationsachse a des Planetenträgers 4 angeordnet ist; somit werden durch den Sicherungsring 23 sämtliche auf dem Umfang angeordneten Planetenbolzen 22 axial fixiert.

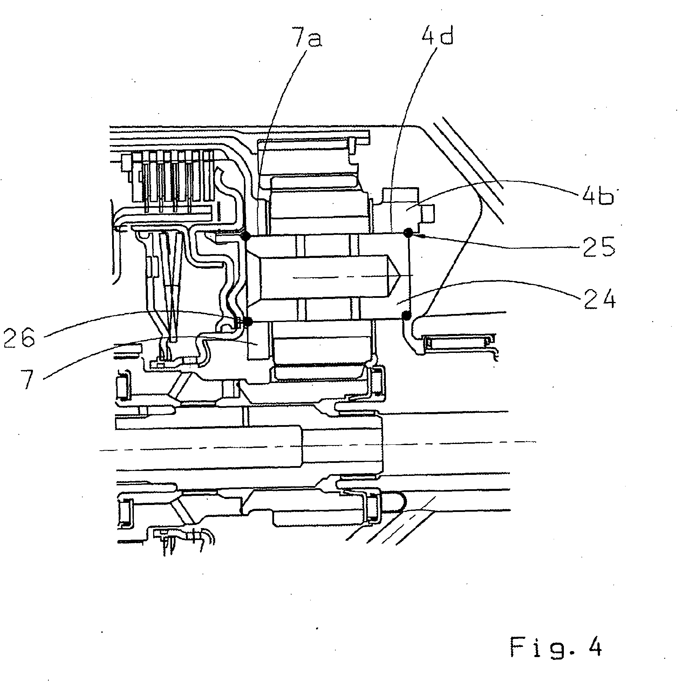

**Fig. 4** zeigt ein weiteres Ausführungsbeispiel der Erfindung für eine abgewandelte axiale Fixierung des Planetenradbolzens 24, wobei für gleiche Teile wiederum gleiche Bezugszahlen verwendet werden. Der Planetenbolzen 24 ist in den Stegblechen 4b und 7 in glatte Durchgangsbohrungen 4d, 7a eingesetzt und stirnseitig auf beiden Seiten verstemmt, was jeweils durch Punkte 25, 26 dargestellt ist. Der Planetenbolzen 24 ist somit in beiden Richtungen axial fixiert.

### Bezugszeichen

- 1: Getriebegehäuse
- 2: Planetenradsatz
- 3: Schaltelement
- 3a: Lamellenpaket
- 4: Planetenträger
- 4a: Nabe
- 4b: 1. Stegblech
- 4c: Befestigungsarm
- 4d: Bohrung
- 5: Planetenrad (Planet)
- 5a: Lager
- 5b: Verzahnung
- 6: Planetenbolzen
- 6a: axiale Sacklochbohrung
- 6b: Radialbohrung
- 7: 2. Stegblech
- 7a: Bohrung
- 7b: Stufenbohrung
- 7c: Stufenbohrung
- 8: Außentamellenträger
- 9: Ringzylinder
- 9a: Zylinderwand
- 9b: Durchtrittsbohrung
- 9c: Zylinderboden
- 9d: ringförmige Einbuchtung
- 10: Nietverbindung
- 11: Ringkolben
- 11a: Druckring
- 11b: zylindrischer Fortsatz
- 12: Druckraum
- 13: Durchgangsbohrung
- 14: Druckölkanal
- 15: Stauscheibe
- 16: Druckausgleichskammer
- 17: Tellerfeder
- 18: Schmierölkammer
- 19: Sicherungsring
- 20: Planetenbolzen
- 21: Sicherungsring
- 22: Planetenbolzen
- 23: Sicherungsring
- 24: Planetenbolzen
- 25: Verstemmung
- 26: Verstemmung

## Patentansprüche

1. Planetenradsatz, bestehend aus einem Planetenräder (5) aufnehmenden Planetenradträger (4) mit einem ersten und einem zweiten Stegblech (4b, 7), welches jeweils Bohrungen (4d, 7a) zur Aufnahme von axial fixierbaren Planetenradbolzen (6) aufweist,
wobei der Planetenradträger (4) über das zweite Stegblech (7) mit einem ein Drehmoment übertragenden Lamellenträger (8) eines benachbarten Schaltelementes (3) drehfest verbunden ist,
**dadurch gekennzeichnet,**
**dass** mit dem zweiten Stegblech (7) zusätzlich zu dem Lamellenträger (8) ein Ringzylinder (9) drehfest verbunden ist, der kein Drehmoment überträgt und mit einem Ringkolben (11) zur Bildung eines dem Schaltelement (3) zugeordneten Druckraumes (12) zusammenwirkt,
wobei der Ringzylinder (9) einen axialen Anschlag für die Planetenradbolzen (6) bildet.

2. Planetenradsatz, bestehend aus einem Planetenräder (5) aufnehmenden Planetenradträger (4) mit einem ersten und einem zweiten Stegblech (4b, 7), welches jeweils Bohrungen (4d, 7a) zur Aufnahme von axial fixierbaren Planetenradbolzen (22) aufweist,
wobei der Planetenradträger (4) über das zweite Stegblech (7) mit einem ein Drehmoment übertragenden Lamellenträger (8) eines benachbarten Schaltelementes (3) drehfest verbunden ist,
**dadurch gekennzeichnet,**
**dass** mit dem zweiten Stegblech (7) zusätzlich zu dem Lamellenträger (8) ein Ringzylinder (9) drehfest verbunden ist, der kein Drehmoment überträgt und mit einem Ringkolben (11) zur Bildung eines dem Schaltelement (3) zugeordneten Druckraumes (12) zusammenwirkt,
und **dass** das zweite Stegblech (7) eine Stufenbohrung (7c) als axialen Anschlag für die Planetenradbolzen (22) aufweiset.

3. Planetenradsatz nach einem der Ansprüche 1 oder 2, **dadurch gekennzeichnet, dass** der Ringzylinder (9) einen Zylinderboden (9c) mit einer ringförmigen Einbuchtung (9d) zur Bildung einer Schmierölkammer (18) aufweist, die ausgangsseitig mit den Lagern (5a) der Planetenräder (5) kommuniziert und die eingangsseitig mit einer radial innen angeordneten Schmierölversorgung kommuniziert.

4. Planetenradsatz nach einem der Ansprüche 1, 2 oder 3, **dadurch gekennzeichnet, dass** der Ringzylinder (9) eine radial innere, verlängerte Zylinderwand (9a) aufweist, die mit der Rückseite des Ringkolbens (11) eine dem Schaltelement (3) zugeordnete Druckausgleichskammer (16) bildet.

5. Planetenradsatz nach Anspruch 4, **dadurch gekennzeichnet, dass** die verlängerte Zylinderwand (9a) des Ringzylinders (9) eine Durchtrittsbohrung (9b) aufweist, über welche die Druckausgleichskammer (16) mit Schmieröl versorgbar ist.

6. Planetenradsatz nach einem der Ansprüche 2 bis 5, **dadurch gekennzeichnet, dass** die Planetenradbolzen (20) auf ihrer dem Ringzylinder (9) zugewandten Seite durch einen Sicherungsring (21) im zweiten Stegblech (7) axial fixierbar sind.

7. Planetenradsatz nach einem der Ansprüche 2 bis 5, **dadurch gekennzeichnet, dass** die Planetenradbolzen (24) im ersten und zweiten Stegblech (4b, 7) durch Verstemmung (25, 26) auf ihrem stirnseitigen Außenumfang gesichert sind.

8. Planetenradsatz nach einem der Ansprüche 1 bis 6, **dadurch gekennzeichnet, dass** die Planetenradbolzen (6) auf ihrer dem Ringzylinder (9) abgewandten Seite durch einen Sicherungsring (19) im Planetenträger (4) axial fixiert sind.

9. Planetenradsatz nach einem der Ansprüche 1 bis 8, **dadurch gekennzeichnet, dass** der Ringzylinder (9) an dem zweiten Stegblech (7) durch eine Nietverbindung (10) befestigt ist.

10. Planetenradsatz nach einem der Ansprüche 1 bis 9, **dadurch gekennzeichnet, dass** der dem Schaltelement (3) zugeordnete Druckraum (12) über eine im zweiten Stegblech (7) angeordnete Durchgangsbohrung (13) und im Planetenradträger (4) angeordnete Kanäle (14) mit Drucköl versorgbar ist.

11. Planetenradsatz nach einem der Ansprüche 1 bis 10, **dadurch gekennzeichnet, dass** das Schaltelement (3) ein Lamellenpaket (3a) und der Ringkolben (11) einen äußeren Druckring (11a) aufweisen, wobei das Lamellenpaket (3a) von dem Druckring (11a) in axialer Richtung belastbar ist.

## Claims

1. Planetary gear set, comprising a planetary gear carrier (4) which receives planetary gears (5) and has a first and a second web plate (4b, 7) which have in each case holes (4d, 7a) for receiving planetary gear pins (6) which can be fixed axially, the planetary gear carrier (4) being connected in a rotationally fixed manner via the second web plate (7) to a multiple-disc carrier (8) of an adjacent selector element (3), which multiple-disc carrier (8) transmits a torque, **characterized in that,** in addition to the multiple-disc carrier (8), an annular cylinder (9) is connected in a rotationally fixed manner to the second web plate (7), which annular cylinder (9) does not transmit a torque and interacts with an annular piston (11) to form a pressure chamber (12) which is assigned to the selector element (3), the annular cylinder (9) forming an axial stop for the planetary gear pins (6).

2. Planetary gear set, comprising a planetary gear carrier (4) which receives planetary gears (5) and has a first and a second web plate (4b, 7) which have in each case holes (4d, 7a) for receiving planetary gear pins (22) which can be fixed axially, the planetary gear carrier (4) being connected in a rotationally fixed manner via the second web plate (7) to a multiple-disc carrier (8) of an adjacent selector element (3), which multiple-disc carrier (8) transmits a torque, **characterized in that**, in addition to the multiple-disc carrier (8), an annular cylinder (9) is connected in a rotationally fixed manner to the second web plate (7), which annular cylinder (9) does not transmit a torque and interacts with an annular piston (11) to form a pressure chamber (12) which is assigned to the selector element (3), and **in that** the second web plate (7) has a stepped hole (7c) as axial stop for the planetary gear pins (22).

3. Planetary gear set according to either of Claims 1 and 2, **characterized in that** the annular cylinder (9) has a cylinder base (9c) with an annular indentation (9d) for forming a lubricating-oil chamber (18) which communicates on the outlet side with the bearings (5a) of the planetary gears (5) and which communicates on the inlet side with a lubricating-oil supply which is arranged radially on the inside.

4. Planetary gear set according to one of Claims 1, 2 or 3, **characterized in that** the annular cylinder (9) has a radially inner, extended cylinder wall (9a) which, together with the rear side of the annular piston (11), forms a pressure equalization chamber (16) which is assigned to the selector element (3).

5. Planetary gear set according to Claim 4, **characterized in that** the extended cylinder wall (9a) of the annular cylinder (9) has a passage hole (9b), via which the pressure equalization chamber (16) can be supplied with lubricating oil.

6. Planetary gear set according to one of Claims 2 to 5, **characterized in that** the planetary gear pins (20) can be fixed axially in the second web plate (7) by a securing ring (21), on its side which faces the annular cylinder (9).

7. Planetary gear set according to one of Claims 2 to 5, **characterized in that** the planetary gear pins (24) are secured in the first and second web plates (4b, 7) by caulking (25, 26) on their end-side outer circumference.

8. Planetary gear set according to one of Claims 1 to 6, **characterized in that** the planetary gear pins (6) are fixed axially in the planetary carrier (4) by a securing ring (19), on their side which faces away from the annular cylinder (9).

9. Planetary gear set according to one of Claims 1 to 8, **characterized in that** the annular cylinder (9) is fastened to the second web plate (7) by a rivet fastening (10).

10. Planetary gear set according to one of Claims 1 to 9, **characterized in that** the pressure chamber (12) assigned to the selector element (3) can be supplied with compressed oil via a through hole (13) which is arranged in the second web plate (7) and via channels (14) which are arranged in the planetary gear carrier (4).

11. Planetary gear set according to one of Claims 1 to 10, **characterized in that** the selector element (3) has a multiple-disc assembly (3a) and the annular piston (11) has an outer thrust ring (11a), it being possible for the multiple-disc assembly (3a) to be loaded in the axial direction by the thrust ring (11a).

## Revendications

1. Jeu de roues planétaires, constitué d'un porte-satellites (4) recevant des roues planétaires (5), avec une première et une deuxième tôle nervurée (4b, 7), qui présente à chaque fois des alésages (4d, 7a) pour recevoir des boulons de roues planétaires (6) pouvant être fixés axialement, le porte-satellites (4) étant connecté de manière solidaire en rotation par le biais de la deuxième tôle nervurée (7) à un porte-lamelles (8) d'un élément de commutation adjacent (3) pour le transfert de couple,
**caractérisé en ce que**
la deuxième tôle nervurée (7) est connectée de manière solidaire en rotation en plus du porte-lamelles (8) à un cylindre annulaire (9) qui ne transfère pas de couple et qui coopère avec un piston annulaire (11) pour former un espace de pression (12) associé à l'élément de commutation (3),
le cylindre annulaire (9) formant une butée axiale pour les boulons de roues planétaires (6).

2. Jeu de roues planétaires constitué d'un porte-satellites (4) recevant des roues planétaires (5), avec une première et une deuxième tôle nervurée (4b, 7), qui présente à chaque fois des alésages (4d, 7a) pour recevoir des boulons de roues planétaires (22) pouvant être fixés axialement,
le porte-satellites (4) étant connecté de manière solidaire en rotation par le biais de la deuxième tôle nervurée (7) à un porte-lamelles (8) d'un élément de commutation adjacent (3) pour le transfert de couple,
**caractérisé en ce que**
la deuxième tôle nervurée (7) est connectée de manière solidaire en rotation en plus du porte-lamelles (8) à un cylindre annulaire (9) qui ne transfère pas de couple et qui coopère avec un piston annulaire (11) pour former un espace de pression (12) associé à l'élément de commutation (3),
et **en ce que** la deuxième tôle nervurée (7) présente un alésage étagé (7c) servant de butée axiale pour les boulons de roues planétaires (22).

3. Jeu de roues planétaires selon l'une quelconque des revendications 1 ou 2, **caractérisé en ce que** le cylindre annulaire (9) présente un fond de cylindre (9c) avec un renfoncement annulaire (9d) pour former une chambre d'huile de lubrification (18), qui communique du côté de la sortie avec les paliers (5a) des roues planétaires (5) et qui communique du côté de l'entrée avec une alimentation en huile de lubrification disposée radialement à l'intérieur.

4. Jeu de roues planétaires selon l'une quelconque des revendications 1, 2 ou 3, **caractérisé en ce que** le cylindre annulaire (9) présente une paroi cylindrique prolongée et radialement interne (9a), qui forme avec le dos du piston annulaire (11) une chambre de compensation de la pression (16) associée à l'élément de commutation (3).

5. Jeu de roues planétaires selon la revendication 4, **caractérisé en ce que** la paroi cylindrique prolongée (9a) du cylindre annulaire (9) présente un alésage traversant (9b) par le biais duquel la chambre de compensation de la pression (16) peut être alimentée en huile de lubrification.

6. Jeu de roues planétaires selon l'une quelconque des revendications 2 à 5, **caractérisé en ce que** les boulons de roues planétaires (20) peuvent être fixés axialement sur leur côté tourné vers le cylindre annulaire (9) par une bague de fixation (21) dans la deuxième tôle nervurée (7).

7. Jeu de roues planétaires selon l'une quelconque des revendications 2 à 5, **caractérisé en ce que** les boulons de roues planétaires (24) dans la première et la deuxième tôle nervurée (4b, 7) sont fixés par matage (25, 26) sur leur périphérie extérieure du côté frontal.

8. Jeu de roues planétaires selon l'une quelconque des revendications 1 à 6, **caractérisé en ce que** les boulons de roues planétaires (6) sont fixés axialement sur leur côté opposé au cylindre annulaire (9) par une bague de fixation (19) dans le support planétaire (4).

9. Jeu de roues planétaires selon l'une quelconque des revendications 1 à 8, **caractérisé en ce que** le cylindre annulaire (9) est fixé sur la deuxième tôle nervurée (7) par une connexion rivetée (10).

10. Jeu de roues planétaires selon l'une quelconque des revendications 1 à 9, **caractérisé en ce que** l'espace de pression (12) associé à l'élément de commutation (3) peut être alimenté en huile sous pression par le biais d'un alésage traversant (13) disposé dans la deuxième tôle nervurée (7) et par le biais de canaux (14) disposés dans le porte-satellites (4).

11. Jeu de roues planétaires selon l'une quelconque des revendications 1 à 10, **caractérisé en ce que** l'élément de commutation (3) présente un paquet de lamelles (3a) et le piston annulaire (11) présente une bague de pression extérieure (11a), le paquet de lamelles (3a) pouvant être contraint dans la direction axiale par la bague de pression (11a).
